# EUROPEAN PATENT APPLICATION

(11) **EP 4 744 565 A1**
(43) Date of publication of application: **20.05.2026**
(21) Application number: 24900862.4
(22) Date of filing: 01.11.2024
(51) Int. Cl.: A47L 9/28, A47L 5/26, G06N 3/08

(54) **CLEANER AND CONTROL METHOD THEREFOR**

(30) Priority: 04.12.2023 KR 20230173763
(71) Applicant: Samsung Electronics Co., Ltd., Suwon-si, Gyeonggi-do 16677 (KR)
(72) Inventor: AHN, Sangwon, Suwon-si, Gyeonggi-do 16677 (KR); KWON, Taejun, Suwon-si, Gyeonggi-do 16677 (KR); SONG, Hoyoon, Suwon-si, Gyeonggi-do 16677 (KR); LEE, Bokyung, Suwon-si, Gyeonggi-do 16677 (KR); LIM, Seonjae, Suwon-si, Gyeonggi-do 16677 (KR); JO, Eunae, Suwon-si, Gyeonggi-do 16677 (KR); HAHM, Seongil, Suwon-si, Gyeonggi-do 16677 (KR)
(74) Representative: Gulde & Partner
(86) International application number: PCT/KR2024/017084
(87) International publication number: WO 2025/121675

(57) **Abstract**

The vacuum cleaner includes a plurality of sensors configured to detect an operation of the vacuum cleaner, a memory configured to store a pre-trained neural network model and use pattern information of a user with respect to use of the vacuum cleaner, and a processor configured to control the vacuum cleaner by determining suction intensity to be applied by the vacuum cleaner using one or more of the use pattern information of the user, sensor information detected from the plurality of sensors, and the pre-trained neural network model.

## Description

### [BACKGROUND OF THE INVENTION]

### [Field of the Invention]

The disclosure relates to a vacuum cleaner and a method for controlling thereof, and more particularly to a vacuum cleaner capable of adjusting suction force of a motor based on a trained neural network model and a user use pattern and a method for controlling thereof.

### [Description of the Related Art]

A vacuum cleaner may include a main body of the vacuum cleaner in which a vacuum suctioning device and a dust collecting device are installed, and a suction module which connects to the main body. Recently, rotating brushes for easily suctioning foreign materials at a surface to be cleaned are being installed in the suction module.

The vacuum cleaner operates on various surfaces to be cleaned, and there is a need for different suction forces and brush operating states to be applied for every surface to be cleaned.

### [Disclosure]

### [Technical Solution]

According to the disclosure for achieving the object described above, a vacuum cleaner may include a plurality of sensors configured to detect an operation of the vacuum cleaner, a memory configured to store a pre-trained neural network model and use pattern information of a user with respect to the operation of the vacuum cleaner, and a processor configured to control the vacuum cleaner by determining suction intensity to be applied by the vacuum cleaner.

The processor is configured to determine suction intensity to be applied by the vacuum cleaner using one or more of the use pattern information, sensor information detected from the plurality of sensors, and the pre-trained neural network model.

The pre-trained neural network model may be a model that outputs a probability value for a plurality of floor types, respectively, based on sensor information detected from a sensor among the plurality of sensors, and the processor may be configured to check a floor type by inputting sensor information detected from the plurality of sensors in the pre-trained neural network model, and determine suction intensity to be applied to the vacuum cleaner by using the checked floor type and the use pattern information.

The vacuum cleaner may further include a driving device configured to control a motor that provides driving force of a brush of the vacuum cleaner, and the processor may be configured to determine a rotation speed of the brush using the checked floor type and the use pattern information, and control the driving device for the brush to rotate at the determined rotation speed.

The processor may be configured to adjust, based on the user command to adjust suction intensity of the vacuum cleaner being received while the vacuum cleaner is operating at the determined suction intensity, a current suction intensity to a corresponding suction intensity of the user command, and store the adjusted suction intensity and the checked floor type in the memory.

The processor may be configured to correct the use pattern information using the suction intensity and the checked floor type stored in the memory.

The use pattern information may include at least one from among a user preference suction intensity, brush speed information, and protection mode application information for the plurality of floor types, respectively.

The pre-trained neural network may be a first neural network, and the memory may be configured to store the first neural network model and a second neural network model which output probability values for each of the plurality of floor types, and the processor may be configured to obtain first probability information by inputting sensor information detected from the plurality of sensors in the first neural network model, obtain second probability information by inputting sensor information detected from the plurality of sensors in the second neural network model, and determine a floor type based on the obtained first probability information and second probability information.

The processor may be configured to check a highest probability value from among the first probability information and the second probability information, and determine a floor type corresponding to the checked highest probability value as a current floor type.

The plurality of floor types may include a normal floor, a low-pile carpet, a medium-pile carpet, and a high-pile carpet.

The processor may be configured to determine, based on the checked floor type being the medium-pile carpet or the high-pile carpet, and the use pattern information including carpet protection information, suction intensity with a low suction force than suction force of when checked as the normal floor.

The pre-trained neural network model may be a model that outputs suction intensity to be applied by the vacuum cleaner by being trained using sensor information detected from the plurality of sensors and use pattern information, and the processor may be configured to determine suction intensity to be applied to the vacuum cleaner by inputting sensor information detected from the plurality of sensors in the pre-trained neural network model.

The processor may be configured to adjust, based on the user command to adjust suction intensity of the vacuum cleaner being input while the vacuum cleaner is operating at the determined suction intensity, current suction intensity to a suction intensity corresponding to the user command, store the user command and the sensor information detected from the plurality of sensors in the memory, and re-train the pre-trained neural network model using the user command and the sensor information stored in the memory.

The pre-trained neural network may be a first neural network, and the memory may be configured to store the first neural network model configured to output floor type information by receiving sensor information and a second neural network model configured to output suction force based on type information, and the processor may be configured to check a floor type by inputting sensor information detected from the plurality of sensors in the first neural network model, and check suction intensity to be applied to the vacuum cleaner by inputting the checked floor type in the second neural network model.

The plurality of sensors may include an acceleration sensor configured to detect a moving state of the vacuum cleaner, and the processor may be configured to determine, based on the vacuum cleaner being checked as moving repeatedly with respect to a same area, an increased suction intensity than a current suction intensity.

The plurality of sensors may include at least one from among a first sensor configured to detect suction pressure of the vacuum cleaner, a second sensor configured to detect current supplied to the motor which drives the brush, a third sensor configured to detect an output value of the motor that drives the brush, and a fourth sensor configured to detect the rotation speed of the brush.

According to an embodiment of the disclosure, a method for controlling a vacuum cleaner includes detecting an operation of the vacuum cleaner using a plurality of sensors, determining suction intensity to be applied to the vacuum cleaner using sensor information detected from the plurality of sensors, a pre-trained neural network model, and pre-stored use pattern information, and controlling a motor of the vacuum cleaner using the determined suction intensity.

The pre-trained neural network model may be a model that outputs a probability value for each of a plurality of floor types based on sensor information detected from a sensor, and the determining suction intensity may include checking a floor type by inputting sensor information detected from the plurality of sensors in the pre-trained neural network model, and checking suction intensity to be applied to the vacuum cleaner by using the checked floor type and the use pattern information.

The method for controlling may further include receiving a user command for adjusting suction intensity of the vacuum cleaner while operating at the determined suction intensity, adjusting current suction intensity to a suction intensity corresponding to the user command based on the user command, storing the adjusted suction intensity and the checked floor type in the memory, and correcting the use pattern information using the suction intensity and the checked floor type stored in the memory.

The determining suction intensity may include receiving sensor information and checking a floor type by inputting the detected sensor information in a first neural network model configured to output floor type information, and checking suction intensity to be applied to the vacuum cleaner by inputting the checked type information in a second neural network model configured to output suction force based on type information.

According to an embodiment of the disclosure, in terms of a non-transitory computer-readable recording medium in which a program for executing a control method in a vacuum cleaner is stored, the control method includes detecting an operation of the vacuum cleaner using a plurality of sensors, determining suction intensity to be applied to the vacuum cleaner using sensor information detected from the plurality of sensors, a pre-trained neural network model, and pre-stored use pattern information, and controlling a motor of the vacuum cleaner using the determined suction intensity.

### [Description of Drawings]

Aspects, features, and advantages described above or different from embodiments of the disclosure will be made clearer through descriptions described below with reference to the accompanied drawings. In the accompanied drawings:
FIG. 1 is a diagram illustrating an operation of a vacuum cleaner according to an embodiment of the disclosure;
FIG. 2 is a diagram illustrating a configuration of a vacuum cleaner according to an embodiment of the disclosure;
FIG. 3 is a diagram illustrating a configuration of a vacuum cleaner according to an embodiment of the disclosure;
FIG. 4 is a diagram illustrating an example of information being collected from a sensor in various floor environments;
FIG. 5 is a diagram illustrating a configuration example of a neural network model according to an embodiment of the disclosure;
FIG. 6 is a diagram illustrating a configuration example of a neural network model according to an embodiment of the disclosure;
FIG. 7 is a diagram illustrating a configuration example of a neural network model according to an embodiment of the disclosure;
FIG. 8 is a diagram illustrating a configuration example of a neural network model according to an embodiment of the disclosure;
FIG. 9 is a diagram illustrating a configuration example of a neural network model according to an embodiment of the disclosure;
FIG. 10 is a diagram illustrating a configuration example of a neural network model according to an embodiment of the disclosure;
FIG. 11 is a diagram illustrating a configuration example of a neural network model according to an embodiment of the disclosure;
FIG. 12 is a diagram illustrating a configuration example of a neural network model according to an embodiment of the disclosure;
FIG. 13 is a diagram illustrating a display example in a display of a vacuum cleaner according to an embodiment of the disclosure;
FIG. 14 is a diagram illustrating a display example in a display of a vacuum cleaner according to an embodiment of the disclosure;
FIG. 15 is a diagram illustrating a modified example of suction force according to an embodiment of the disclosure;
FIG. 16 is a flowchart illustrating a method for controlling a vacuum cleaner according to an embodiment of the disclosure;
FIG. 17 is a flowchart illustrating a method for controlling suction force and a brush operation of a vacuum cleaner according to an embodiment of the disclosure;
FIG. 18 is a flowchart illustrating a training operation of a neural network model according to an embodiment of the disclosure; and
FIG. 19 is a flowchart illustrating a control operation which used information of an external device according to an embodiment of the disclosure.

### [Mode for Invention]

Various modifications may be made to the embodiments, and there may be various types of embodiments. Accordingly, specific embodiments will be illustrated in drawings, and described in detail. However, it should be noted that the various embodiments are not for limiting the scope of the disclosure to a specific embodiment, but they should be interpreted to include all modifications, equivalents, and/or alternatives of the embodiments of the disclosure. With respect to the description of the drawings, like reference numerals may be used to indicate like elements.

In describing the disclosure, in case it is determined that the detailed description of related known technologies may unnecessarily confuse the gist of the disclosure, the detailed description thereof will be omitted.

Further, the embodiments below may be modified to various different forms, and it is to be understood that the scope of the technical spirit of the disclosure is not limited to the embodiments below. Rather, the embodiments are provided so that the disclosure will be thorough and complete, and to fully convey the technical spirit of the disclosure to those skilled in the art.

Terms used in the disclosure have been merely used to described a specific embodiment, and is not intended to limit the scope of projection. A singular expression includes a plural expression, unless otherwise specified.

In the disclosure, expressions such as "have", "may have", "include", and "may include" are used to designate a presence of a corresponding characteristic (e.g., elements such as numerical value, function, operation, or component), and not to preclude a presence or a possibility of additional characteristics.

In the disclosure, expressions such as "A or B", "at least one of A and/or B", or "one or more of A and/or B" may include all possible combinations of the items listed together. For example, "A or B", "at least one of A and B", or "at least one of A or B" may refer to all cases including (1) at least one A, (2) at least one B, or (3) both of at least one A and at least one B.

Expressions such as "1st", "2nd", "first" or "second" used in the disclosure may limit various elements regardless of order and/or importance, and may be used merely to distinguish one element from another element and not limit the relevant element.

When a certain element (e.g., a first element) is indicated as being "(operatively or communicatively) coupled with/to" or "connected to" another element (e.g., a second element), it may be understood as the certain element being directly coupled with/to the another element or as being coupled through other element (e.g., a third element).

On the other hand, when the certain element (e.g., the first element) is indicated as "directly coupled with/to" or "directly connected to" the another element (e.g., the second element), it may be understood as the other element (e.g., the third element) not being present between the certain element and the another element.

The expression "configured to... (or set up to)" used in the disclosure may be used interchangeably with, for example, "suitable for...," "having the capacity to...," "designed to...", "adapted to...", "made to...", or "capable of..." based on circumstance. The term "configured to... (or set up to)" may not necessarily mean "specifically designed to" in terms of hardware.

Rather, in a certain circumstance, the expression "a device configured to..." may mean something that the device "may perform..." together with another device or components. For example, a phrase "a processor configured to (or set up to) perform A, B, or C" may mean a dedicated processor for performing a relevant operation (e.g., embedded processor), or a generic-purpose processor (e.g., a central processing unit (CPU) or an application processor) capable of performing the relevant operations by executing one or more software programs stored in a memory device.

The term 'module' or 'part' used in the embodiments perform at least one function or operation, and may be implemented with a hardware or software, or implemented with a combination of hardware and software. In addition, a plurality of 'modules' or a plurality of 'parts', excluding a 'module' or a 'part' which needs to be implemented to a specific hardware, may be integrated in at least one module and implemented as at least one processor.

Operations performed by a module, a program, or other element, in accordance with the various embodiments, may be executed sequentially, in parallel, repetitively, or in a heuristically manner, or at least some operations may be performed in a different order, omitted, or a different operation may be added.

Meanwhile, the various elements and areas of the drawings have been schematically illustrated. Accordingly, the technical spirit of the disclosure is not limited by relative sizes and distances illustrated in the accompanied drawings.

Meanwhile, the vacuum cleaner according to the various embodiments of the disclosure may include, for example, at least one from among a vacuum cleaner, a robot vacuum cleaner, a handy vacuum cleaner, a stick vacuum cleaner, a mop vacuum cleaner, and the like.

Embodiments of the disclosure will be described in detail below with reference to the accompanied drawings to aid in the understanding of a person of ordinary skill in the art.

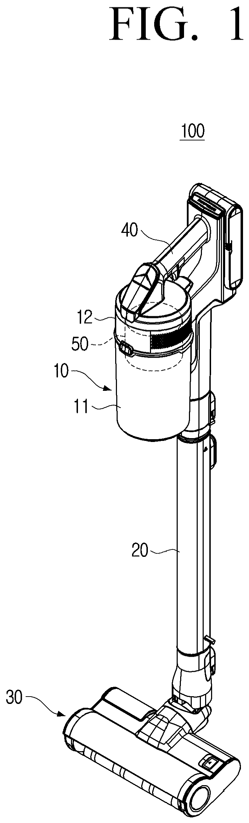

FIG. 1 is a diagram illustrating an operation of a vacuum cleaner according to an embodiment of the disclosure.

Referring to FIG. 1, a vacuum cleaner 100 according to an embodiment of the disclosure may have a form of a stick-type vacuum cleaner (or an upright method). In the example shown, a shape in the upright method in which a suction module is integrally formed with a main body is shown, but at implementation, a canister method in which the suction module is separately provided from the main body and connected by an extension tube may be used, and may be vacuum cleaners of various types such as, for example, and without limitation, a wireless control vacuum cleaner, a robot vacuum cleaner, a handy-type vacuum cleaner, and the like.

The vacuum cleaner 100 may include a vacuum cleaner main body 10 and a suction head 30. Here, the vacuum cleaner main body 10 may be referred to as a main body which is a configuration that includes key configurations such as a motor and a processor. A concept of the main body as described is because separation of configurations such as the suction head 30 or a stick 20 has been assumed, but if the above-described configurations have an integrated form, the relevant configurations may also be referred to as the main body.

The vacuum cleaner 100 may include the stick 20 which connects the vacuum cleaner main body 10 with the suction head 30 and a handle part 40 which is connected with the vacuum cleaner main body 10. The stick 20 described above may connect the vacuum cleaner main body 10 with the suction head 30, and if necessary, the stick 20 and the vacuum cleaner main body 10 may be attached to and detached from each other. In addition, the vacuum cleaner main body 10 may be attached with a cleaning tool which is different from the above-described stick 20 or the suction head 30.

The handle part 40 may be a part that is coupled to the vacuum cleaner main body 10, and may be provided for the user to operate the vacuum cleaner 100 by grasping.

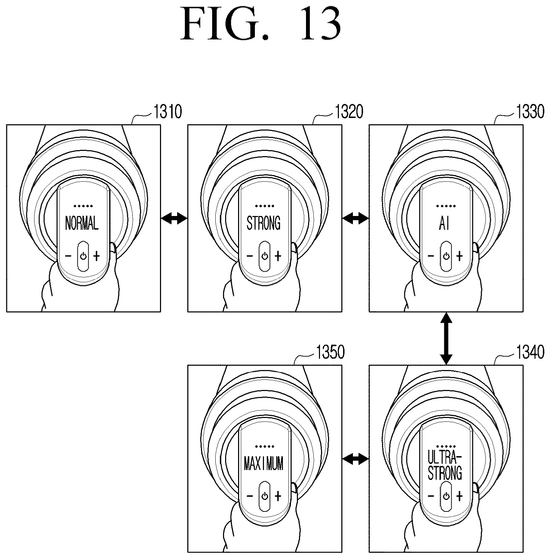

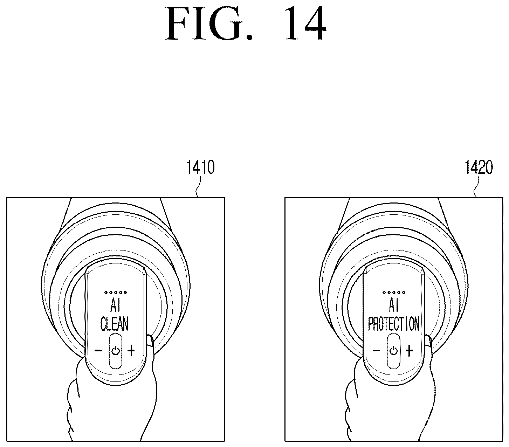

At the handle part 40, an operating part (not shown) is provided for the user to control the vacuum cleaner 100. Alternatively, at implementation, a screen associated with an operation of the vacuum cleaner 100 or an operation area at which a user control command is input may be formed at an upper end of the vacuum cleaner main body 10. The example as described above will be described below in FIG. 13 and FIG. 14.

The vacuum cleaner main body 10 may include a dust collecting device 11 and a driving device 12 arranged inside thereof. The dust collecting device 11 may perform a function of collecting dust by separating foreign materials from air suctioned from the suction head 30.

The driving device 12 may include a motor assembly 50 which generates suction pressure of the vacuum cleaner 100. The motor assembly 50 may generate power to generate suction force from the inside of the vacuum cleaner main body 10.

The motor assembly 50 may include a first motor, and generate suction pressure through a rotation of the first motor. Specifically, when a drive command for the first motor is input and power is supplied to the first motor, an impeller may be rotated by the driving of the first motor. Suction pressure may be formed by a rotation of the impeller, and air included with foreign materials may be suctioned to a suction port by the suction pressure described above. Further, the suction pressure may become greater as a rotation speed of the first motor increases.

If the vacuum cleaner 100 or a user sets (or determines) a suction intensity, the vacuum cleaner 100 may control the first motor to rotate at a rotation speed of the motor which corresponds to the above-described set suction intensity.

The suction head 30 may be provided at a lower portion of the vacuum cleaner main body 10, and arranged so as to be in contact with a surface to be cleaned. The suction head 30 may be provided so as to be in contact with a surface to be cleaned and introduce dust or contaminants of the surface to be cleaned to the inside of the vacuum cleaner main body 10 with suction force generated from the motor assembly 50.

In the suction head 30 as described above, a brush and a second motor may be included. Specifically, when the drive command for the second motor is input and power is provided to the second motor, the brush may be rotated by the driving of the second motor. The second motor described above may include various motors such as, for example, and without limitation, a direct current (DC) motor, an alternating current (AC) motor, a brushless DC (BLDC) motor, and the like. Meanwhile, at implementation, a driving device for providing driving power of the second motor described above may be provided at a side of the suction head 30, and the driving device for controlling the second motor may be provided at the vacuum cleaner main body 10 in certain cases.

Because the brush is formed to be protruded by a certain length outside of the suction port, when the brush is rotated, dust, filth, hairs, and the like that stick to the surface to be cleaned may be struck. Thereby, the foreign materials may be separated from the surface to be cleaned, and easily suctioned by the suction port. The brush described above may be of natural hair or a material with small friction coefficient and good abrasion resistance such as a polyamide (PA), but is not necessarily limited thereto.

Meanwhile, it may be preferable for the above-described suction intensity according to a type of the surface to be cleaned and a rotation speed of the brush to operate by being adjusted to a value corresponding thereto.

For example, when operating at a maximum suction force for all types of surfaces to be cleaned, it may be difficult to proceed with cleaning due to, with respect to a specific floor surface, the relevant floor surface being stuck to the suction head 30, and with respect to a floor surface such as a carpet, a fast brush rotation may generate carpet damage. Based on the above, the vacuum cleaner may identify the type of the surface to be cleaned, and there is a need to operate at the suction intensity and the rotation speed of the brush suitable thereto.

Commonly used surfaces to be cleaned may be divided into a normal floor, a lifted floor, a mat, a low-pile carpet (a length of carpet wool is less than or equal to 4 mm), a medium-pile carpet (a length of carpet wool is between 4 mm to 16 mm), and a high-pile carpet (a length of carpet wool is greater than or equal to 16 mm). Here, 'lifted' may include when a floor mat to the suction head 30 of the vacuum cleaner due to high suction intensity. The carpet may be a thick woolen matter woven such that fluff may be formed at a surface of the coat such as wool. The normal floor may be cases other than the above-described mat, carpet, or lifted floor.

In the disclosure, it has been described assuming that the surface to be cleaned is used divided into the above-described 6 types, but at implementation, only a portion from among the above-described types may be used, and other types of floor surfaces may be used in addition to the above-described examples. For example, the normal floor may be divided by a type of flooring (marble, hardwood, etc.).

As described above, even if the type of the surface to be cleaned is accurately identified, if cleaning is not performed at the suction intensity and the rotation speed of the brush which coincides with an intent of the user (user intent), the user may experience discomfort with respect to the vacuum cleaner.

For example, when proceeding with cleaning of the carpet, a specific user may desire to proceed with cleaning in a method which can minimize carpet damage, and another user may desire to proceed with cleaning in a spotless manner regardless of carpet damage.

Accordingly, it may be preferable to use the vacuum cleaning by determining suction intensity and the rotation speed of the brush (or brush rotation speed) taking into consideration not only the types of the floor surface, but also the intent of the user (or a use pattern of the user).

A method of determining suction intensity (or the brush rotation speed) of a vacuum cleaner may be described below taking into consideration both the floor type of the vacuum cleaner and the use pattern of the user.

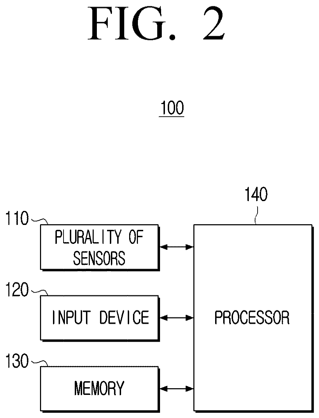

FIG. 2 is a diagram illustrating a configuration of a vacuum cleaner according to an embodiment of the disclosure.

Referring to FIG. 2, the vacuum cleaner 100 may include a plurality of sensors 110, an input device 120, a memory 130, and a processor 140.

The plurality of sensors 110 may generate detection information by detecting an operation of the vacuum cleaner 100. For example, the plurality of sensors 110 may include a first sensor configured to detect suction pressure of the vacuum cleaner, a second sensor configured to detect current provided to the motor that drives the brush, a third sensor configured to detect an output value of the motor that drives the brush, and a fourth sensor configured to detect the rotation speed of the brush. In addition, the plurality of sensors 110 may include an acceleration sensor (or a gyro sensor) configured to detect movement of the vacuum cleaner.

As described above, a sensing operation of the plurality of sensors 110 may be performed based on a control command of the processor 140 which will be described below, and the operation may be automatically measured at a pre-set period basis and provided to the processor 140. Each sensor information (or sensed value) may be a sensed value measured at a given point in time, or may be an average of sensed values over a certain period. Further, the above-described pre-set period basis may be 20 ms, but is not limited thereto.

Meanwhile, the above-described first sensor, fourth sensor, and the like may be arranged within the suction head 30 of FIG. 1, and the second sensor, the third sensor, the acceleration sensor, and the like may be arranged at a side of the vacuum cleaner main body 10. An arrangement example as described above may be one example, and may be changed at implementation.

In addition, five sensors have been provided as examples above, but at implementation, other sensors (e.g., a LiDAR sensor, an ultrasonic sensor, etc.) may be additionally used in addition to the above-described sensors, and a portion from among the above-described sensors may be omitted.

The input device 120 may receive a user command. The user command may be a command for turning-on or turning off an operation of the vacuum cleaner, a command for adjusting suction intensity of the vacuum cleaner, a cleaning mode of the vacuum cleaner (e.g., an AI mode, an AI protection mode, an AI clean mode, a protection mode, or canceling protection mode), and the like.

Meanwhile, in the above, a clean command, suction intensity, and the like have been described as being received directly in the vacuum cleaner 100, but at implementation, the same may be received through a separate external device (e.g. user terminal device, etc.)

The memory 130 may be stored with at least one instruction relating to the vacuum cleaner 100. Further, in the memory 130, an operating system (O/S) for driving the vacuum cleaner 100 may be stored. Instructions as described above such as an instruction for identifying a floor type which will be described below, an instruction determining suction intensity for cleaning, an instruction for controlling various configurations of the vacuum cleaner, an instruction for re-training a pre-stored neural network model, and the like, may be stored.

The memory 130 may include a semi-conductor memory such as a flash memory, a magnetic storage medium such as a hard disk, or the like. For example, in the memory 130, various software modules for operating the vacuum cleaner 100 may be stored according to various embodiments of the disclosure, and the processor 140 may control an operation of the vacuum cleaner 100 by executing the various software modules stored in the memory 130. That is, the memory 130 may be accessed by the processor 140, and reading, writing, modifying, deleting, updating, and the like of data may be performed by the processor 140.

Meanwhile, the term 'memory 130' in the disclosure may be used as a meaning that includes the memory 130, a read only memory (ROM) in the processor 140, a random access memory (RAM), or a memory card (e.g., a micro SD card, a memory stick) which can be mounted in the vacuum cleaner 100.

The memory 130 may be stored with a pre-trained neural network model. For example, a neural network model may be implemented as, for example, and without limitation, a convolutional neural network (CNN), a long short-term memory (LSTM), a deep neural network (DNN), a recurrent neural network (RNN), a Restricted Boltzmann Machine (RBM), a Deep Belief Network (DBN), a bidirectional recurrent deep neural network (BRDNN), and the like, but the above is not limited to the examples as described herein.

The neural network model as described may be a computing system implemented by designing a neural network of a human or animal brain, and may be referred to as a learning model, a machine learning model, an artificial intelligence model, a deep learning model, and the like.

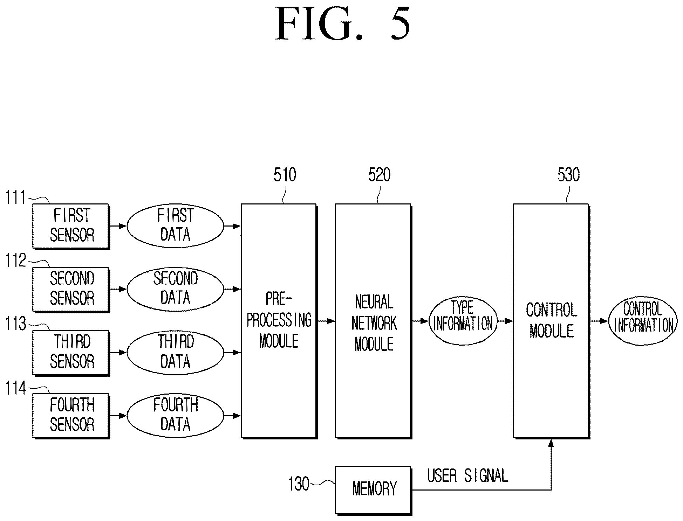

Meanwhile, the neural network model used in the disclosure may be implemented in various forms, but the above will be described in detail in FIG. 5 to FIG. 12.

Further, the memory 130 may include use pattern information of a user (or user pattern information). The user pattern information as described may include, for each of a plurality of floor types, a user preference suction intensity, brush speed information, and protection mode application information.

For example, the user pattern information may be stored with information on suction intensity, brush speed, and the like, preferred by the user for each floor type such as, for example, and without limitation, information that the suction intensity is 3, the brush speed is 4, and that protection mode is not applied on the normal floor, information that the suction intensity is 2, the brush speed is 2, and that protection mode is applied on the low-pile carpet, and the like. Meanwhile, for the user pattern information as described above, a default value initially provided by a manufacturer may be used, and may be updated through a process described below by use of the user.

In addition, the above-described information on the user preference (or user preference information) may be stored distinguished by each user. For example, if it is an environment in which a user can be identified, the user pattern information corresponding to the identified user may be used in the process which will be described below.

Meanwhile, in the above, the above-described user pattern information has been described as being stored in a lookup table form, but at implementation, the above-described user pattern information may be stored as a rule-based rule form, and stored in the neural network model.

Further, the memory 130 may store training data for re-training the neural network model or correcting use pattern information. For example, if a change in the floor type determined by using the neural network model or in suction intensity preferred by the user while using the suction intensity is checked, or information of the acceleration sensor repeatedly cleaning the same area is checked, a state of the vacuum cleaner at this time, sensor information, user operating command, and the like may be stored as the training data. Meanwhile, the re-training of the neural network model or the correcting of the use pattern information as described above may be performed in the vacuum cleaner 100 on its own, and re-trained in an external device due to associated information being transmitted from a separate external device.

The processor 140 may control an overall operation of the vacuum cleaner 100. Specifically, the processor 140 may control the overall operation of the vacuum cleaner 100 by executing at least one instruction stored in the memory 130 as described above.

The processor 140 may be configured of one or a plurality of processors. At this time, the one or the plurality of processors 140 may include at least one from among a central processing unit (CPU), a graphic processing unit (GPU), or a neural processing unit (NPU), but is not limited to the above-described example of the processor 140.

The CPU may be a generic-purpose processor which can perform not only general operations, but also artificial intelligence operations, and may efficiently execute complex programs through a multi-tiered cache structure. The CPU may be advantageous in a series processing method which allows for an organic connection between a previous calculation result and a following calculation result to be possible through a sequential calculation. The generic-purpose processor may not be limited to the above-described example except for when specified as the above-described CPU.

The GPU may be a processor for mass operations such as a floating point operation used in graphics processing, and perform a large-scale operation by integrating cores in mass in parallel. Specifically, the GPU may be advantageous in a parallel processing method such as a convolution operation compared to the CPU. In addition, the GPU may be used as a co-processor 140 for supplementing a function of the CPU. The processor for mass operations may not be limited to the above-described examples unless otherwise specified as the above-described GPU.

The NPU may be a processor which specializes in an artificial intelligence operation using an artificial neural network, and may implement each layer that forms the artificial neural network with hardware (e.g., silicon). At this time, because the NPU is designed specialized according to a required specification of a company, there is a lower degree of freedom compared to the CPU or the GPU, but the NPU may efficiently process the artificial intelligence operation demanded by the company. Meanwhile, as a processor specializing in the artificial intelligence operation, the NPU may be implemented in various forms such as, for example, and without limitation, a tensor processing unit (TPU), an intelligence processing unit (IPU), a vision processing unit (VPU), and the like. The artificial intelligence processor may not be limited to the above-described examples unless otherwise specified as the above-described NPU.

In addition, the one or plurality of processors 140 may be implemented as a System on Chip (SoC). At this time, the SoC may be further included with the memory 130 in addition to the one or plurality of processors 140, and a network interface such as a Bus for data communication between the processor 140 and the memory 130.

If the plurality of processors 140 is included in the System on Chip (SoC) included in the vacuum cleaner 100, the vacuum cleaner 100 may perform an operation associated with artificial intelligence (e.g., an operation associated with training or inference of the artificial intelligence model) using a portion of the processors 140 from among the plurality of processors 140. For example, the vacuum cleaner 100 may perform an operation associated with artificial intelligence using at least one from among the GPU, the NPU, the VPU, the TPU, and a hardware accelerator specializing in artificial intelligence operations such as the convolution operation, and a matrix multiplication operation from among the plurality of processors 140. However, the above is merely one embodiment, and operations associated with artificial intelligence may be processed using the generic-purpose processor 140 such as the CPU.

In addition, the vacuum cleaner 100 may perform an operation for a function associated with artificial intelligence by using multicores (e.g., a dual core, a quad core, etc.) included in one processor 140. Specifically, the vacuum cleaner 100 may perform artificial intelligence operations such as the convolution operation, and the matrix multiplication operation in parallel using the multicores included in the processor 140.

The one or plurality of processors 140 may control to process input data according to a pre-defined operation rule or an artificial intelligence model stored in the memory 130. The pre-defined operation rule or the artificial intelligence model is characterized by being created through training.

Here, the being created through training may mean a pre-defined operation rule or an artificial intelligence model of a desired characteristic being created by applying a learning algorithm to a plurality of training data. The training may be carried out in a device itself in which the artificial intelligence according to the disclosure is performed, or carried out through a separate server and/or system.

The artificial intelligence model may be configured with a plurality of neural network layers. At least one layer may have at least one weight value, and perform a layer operation through an operation result of a previous layer and at least one defined operation. Examples of the neural network may include the convolutional neural network (CNN), the deep neural network (DNN), the recurrent neural network (RNN), the Restricted Boltzmann Machine (RBM), the deep belief network (DBN), the bidirectional recurrent deep neural network (BRDNN), a Deep-Q Networks, and a Transformer, and the neural network in the disclosure may not be limited to the above-described examples unless otherwise specified.

The learning algorithm may be a method for training a predetermined target device (e.g., a robot) to make decisions or predictions by the predetermined device itself using the plurality of training data. Examples of the learning algorithm may include a supervised learning, an unsupervised learning, a semi-supervised learning, or a reinforcement learning, and the learning algorithm of the disclosure is not limited to the above-described examples unless otherwise specified.

Specifically, in the one or more embodiments, the processor 140 may accurately identify a type of the floor surface and perform an operation suitable to the identified type of floor surface. Specifically, the processor 140 may perform a process associated with various embodiments according to the disclosure by using a plurality of modules.

The plurality of modules may be implemented as a hardware module or a software module, and at least a portion of the modules may include the neural network model. For convenience of description below, it will be described assuming that all of the plurality of modules may be implemented through the memory 130 and the processor 140 of the vacuum cleaner 100, but at least a portion of the modules from among the plurality of modules may be implemented by an external device or a server according to an embodiment.

The processor 140 may determine the suction intensity to be applied to the vacuum cleaner. For example, the suction intensity may be determined using use pattern information of a user, sensor information detected from the plurality of sensors, and the like, and methods using the above-described information may be varied.

Based on the above, an embodiment of first identifying a floor type using the neural network model, and determining suction intensity by using the identified floor type and user pattern information thereafter will be first described.

When a neural network model that outputs a probability value for each of the plurality of floor types is used based on sensor information detected from the plurality of sensors, the processor 140 may check the floor type by inputting the sensor information detected from the plurality of sensors in the pre-trained neural network model

Further, the processor 140 may determine the suction intensity to be applied to the vacuum cleaner by using the checked floor type and the use pattern information. For example, the processor 140 may determine, based on the checked floor type being the medium-pile carpet or the high-pile carpet, and the use pattern information including carpet protection information, a suction intensity having a suction force lower than the suction force of when identified as the normal floor.

Here, the suction intensity may indicate a degree of suction of the vacuum cleaner, and if a minimum suction force to a maximum suction force of the vacuum cleaner are divided into a plurality of stages, it may be information indicating one from among each of the stages. For example, if three suction intensities (or suction stages) are supported, the determined suction intensity may be one from among the above-described three suction intensities. The suction intensity described above may be referred to as a suction force, a suction degree, a suction strength, a cleaning intensity, a cleaning strength, and the like.

In addition, the processor 140 may determine not only the suction intensity, but also determine the rotation speed of the brush using the checked floor type and the use pattern information. The processor 140 may control, based on the rotation speed of the brush being determined, the driving device which drives the second motor for the brush to rotate at the determined rotation speed.

Meanwhile, when the user command for adjusting the suction intensity of the vacuum cleaner is input while operating at the determined suction intensity through the above-described process, the processor 140 may adjust the current suction intensity to the suction intensity corresponding to the user command.

At this time, the processor 140 may store the changed suction intensity and the checked floor type in the memory 130. Further, the processor 140 may correct the use pattern information using the changed suction intensity and checked floor type stored in the memory.

Meanwhile, in the above, it has been described as using one neural network model, but at implementation, a plurality of neural network models may be used.

For example, when a first neural network model and a second neural network model which output probability values for each of the plurality of floor types are used, the processor 140 may obtain first probability information by inputting the sensor information detected from the plurality of sensors in the first neural network model, and obtain second probability information by inputting the sensor information detected from the plurality of sensors in the second neural network model

At this time, the two neural network models may be neural network models of different types so as to have different characteristics from each other. For example, the first neural network model may be a CNN model, and the second neural network model may be a LSTM model. A reason for using different models as described above is because an accuracy in classification of each information may be different for each model method. For example, the CNN model may classify distinguishing of the floor and carpet with high accuracy but have lower accuracy in distinguishing the lengths of the carpets. Conversely, the LSTM model may have rather low accuracy in distinguishing the normal floor and carpet, but have high accuracy in distinguishing the lengths of the carpets.

By using the plurality of neural network models with different characteristics from each other as described above, the type of the floor may be checked with higher accuracy.

Further, the processor 140 may determine the floor type based on the obtained first probability information and second probability information. For example, the processor 140 may check the highest probability value from among the first probability information and the second probability information, and determine the floor type corresponding to the checked probability value as the current floor type. Meanwhile, at implementation, rather than using the highest probability value, the probability values estimated from each of the neural network models may be averaged, and the floor type corresponding to a value with high average probability may be determined as the current floor type.

Alternatively, when using the first neural network model configured to output floor type information by receiving sensor information and the second neural network model configured to output suction force based on type information, the processor 140 may check the floor type by inputting the sensor information detected from the plurality of sensors in the first neural network model, and check the suction intensity to be applied to the vacuum cleaner by inputting the checked floor type in the second neural network model.

Meanwhile, when operating at the suction intensity determined through the above-described operation, and the suction force is adjusted through user operation, the processor 140 may store the adjusted information and information sensed from the sensor and the like in the memory 130. The stored information are used the above for the re-training of the second neural network model.

Meanwhile, in the above, a method of consecutively determining the determining of the floor type and the suction force has been described, but at implementation, the suction force may be determined directly using one neural network model.

For example, the pre-trained neural network model may be trained using the sensor information detected from the sensors and the use pattern information, and when a model that outputs the suction intensity to be applied to the vacuum cleaner is used, the processor 140 may determine the suction intensity to be applied to the vacuum cleaner by inputting the sensor information detected from the sensors in the pre-trained neural network model.

At this time, the processor 140 may adjust, based on the user command for adjusting the suction intensity of the vacuum cleaner being input while operating at the determined suction intensity, the current suction intensity to the suction intensity corresponding to the user command, store the user command and the sensor information detected from the sensors in the memory, and re-train the neural network model using the user command and the sensor information stored in the memory.

The processor 140 may periodically perform determination of the above-described suction intensity. The period described above may correspond to a measuring period of the sensor described above, but a time period greater than or equal to two times more than the measuring period may be used.

Further, the processor 140 may control the vacuum cleaner 100 by using the determined suction intensity. For example, the processor 140 may control the driving device that drives the motor for the first motor to rotate at a rotation speed corresponding to the determined suction intensity.

To this end, the memory 130 may store the lookup table which stores the suction intensities and a motor speed corresponding to each suction intensity, and the processor 140 may control the driving device using the determined motor speed based on the above-described lookup table and the determined suction intensity. Meanwhile, in the above, the suction intensity may be proactively determined, and the motor speed is described as being determined using the determined suction intensity thereafter, but at implementation, the motor speed may be determined direction in a prior determining of the suction intensity.

The processor 140 may control, based on a suction force adjusting command being input through the input device 120, the vacuum cleaner 100 to operate at a suction force corresponding to the input adjustment command.

Meanwhile, in the above, the suction force has been shown and described as being changed according to the control command of the user, but at implementation, the suction force may also be changed by a specific movement of the user rather than the control command of the user. For example, based on one from among the plurality of sensors being the acceleration sensor, and sensing information input through the acceleration sensor being checked as a user motion (or gesture) that repeatedly moves in a specific area, the processor 140 may determine an increased suction intensity than the current suction intensity.

The vacuum cleaner according to the embodiment as described above may determine the suction force using the neural network model and the user pattern information, and based on the determined suction force being used, that is, because not only a state of a floor surface of the surface to be cleaned but also the use pattern of the user can be taken into consideration, proceeding with cleaning suitable to a cleaning environment and the user intent may be possible.

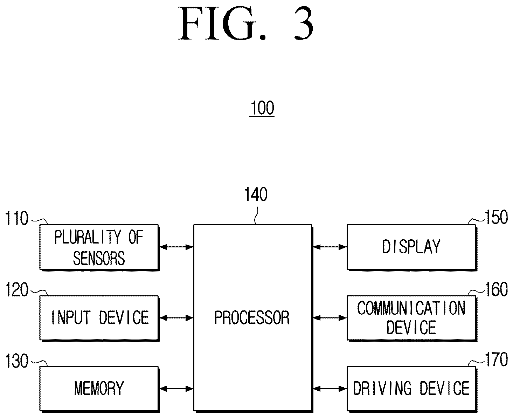

Meanwhile, in the above, although only simple configurations of the vacuum cleaner 100 have been shown, at implementation, various configurations may be further included. The above will be described below with reference to FIG. 3.

FIG. 3 is a diagram illustrating a configuration of a vacuum cleaner according to an embodiment of the disclosure.

Referring to FIG. 3, the vacuum cleaner 100 may include the plurality of sensors 110, the input device 120, the memory 130, the processor 140, a display 150, a communication device 160, and a driving device 170.

Because the plurality of sensors 110, the input device 120, the memory 130, and the processor 140 have been described in FIG. 2, only operations different from the previously-described operations will be described below.

The display 150 may display various information supported in the vacuum cleaner 100. The display 150 described above may be a display such as a LCD, and may be implemented as a touch screen capable of performing the function of the above-described input device together therewith.

The display 150 may display information such as an operating state of the vacuum cleaner 100 (a clean mode, an AI mode, a manual mode), a degree of suction force of the vacuum cleaner, and a battery state.

Further, the processor 140 may control, based on the suction intensity being changed, the display 150 for the changed suction intensity to be displayed. In addition, the processor 140 may control, based on an operating mode of the vacuum cleaner being changed, the display 140 for the changed operating mode to be displayed.

The communication device 160 may be formed to connect the vacuum cleaner 100 to an external device (specifically, a terminal device, a home server, an external server, etc.), and may be connected by not only a short-range wireless communication method (e.g., Bluetooth, Wi-Fi, Wi-Fi Direct), but also a long-range wireless communication method (e.g., wireless communication including GSM, UMTS, LTE, WiBRO, etc.)

The communication device 160 may include at least one from among a Wi-Fi module, a Bluetooth module, a wireless communication module, an NFC module, and an Ultra-Wide Band (UWB) module. Specifically, each of the Wi-Fi module and the Bluetooth module may perform communication in a Wi-Fi method and a Bluetooth method. When using the Wi-Fi module or the Bluetooth module, various connection information such as a SSID may be first transmitted and received, and various information may be transmitted and received after having communicative connected using the above.

In addition, the wireless communication module may perform communication according to various communication standards such as, for example, and without limitation, IEEE, ZigBee, 3rd Generation (3G), 3rd Generation Partnership Project (3GPP), Long Term Evolution (LTE), 5th Generation (5G), and the like. Further, the NFC module may perform communication in a near field communication (NFC) method which uses a 13.56 MHz bandwidth from among various RF-ID frequency bandwidths such as, for example, and without limitation, 135 kHz, 13.56 MHz, 433 MHz, 860-960 MHz, 2.45 GHz, and the like.

The communication device 160 may receive a trained neural network model from an external device, and may receive training data necessary in the training of the relevant neural network model or transmit the training data collected from the vacuum cleaner 100 to the external device.

Alternatively, when using the neural network model stored in the external server (not shown), the communication device 160 may transmit sensing information collected from the plurality of sensors and/or the user operating command to the external server. In response thereto, the communication device 160 may receive information on the identified floor type or suction force to be used from the external server.

The driving device 170 may control the motor. Specifically, the vacuum cleaner according to the embodiment may include two motors (e.g., the first motor and the second motor), and the driving power and/or a control signal corresponding to the determined rotation speed may be provided to each motor for the each motor to rotate at the rotation speed determined from the processor 140.

Meanwhile, based on the vacuum cleaner 100 being implemented as the robot vacuum cleaner, the driving device 170 may additionally include a motor for a movement of the vacuum cleaner.

In showing and describing FIG. 3, various configurations which can be included in the vacuum cleaner 100 have been shown, but at implementation, the above may be implemented in a form in which a portion from among the above-described configurations are omitted, and other configurations which are not shown may be additionally included. For example, a microphone, a speaker, and the like may be further included, and a control command may be received in voice from the user, or various information of the vacuum cleaner may be output in sound.

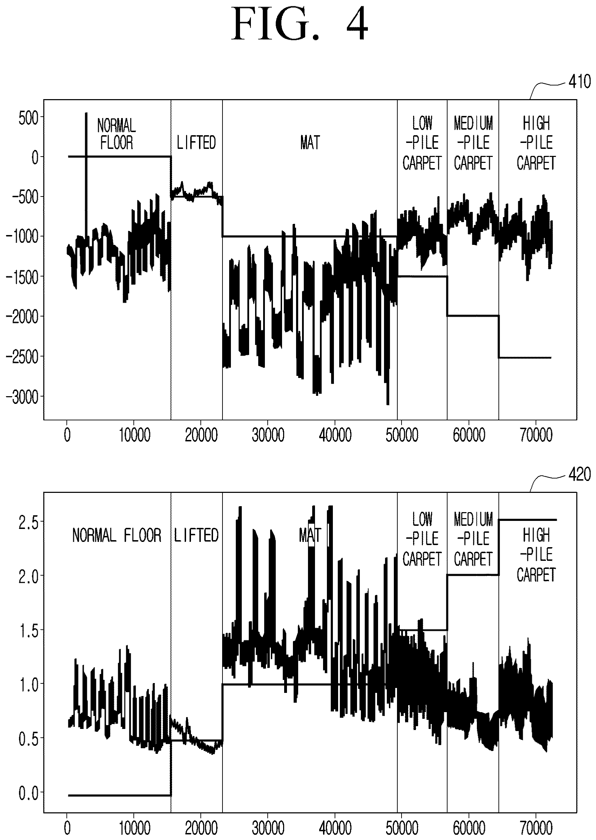

FIG. 4 is a diagram illustrating an example of information being collected from a sensor in various floor environments.

Referring to FIG. 4, first data 410 may be an example of information measured from the first sensor (specifically, suction pressure of the vacuum cleaner), and second data 420 may be an example of information measured from the second sensor (specifically, current provided to the motor which drives the brush).

Referring to the above-described first data 410 and the second data 420, the measured information may have different patterns according to the types of the floor surfaces. However, although a slight similarity can be found when comparing data measured from the normal floor and from the carpet, that is, when using only the measurement values of the above-described data as is, distinguishing the normal floor from the carpet may be difficult.

Accordingly, in the disclosure, sensing information measured from four sensors are used, a more accurate floor type is distinguished by inputting the information therefrom in the neural network model. Specifically, the normal floor and the carpet may show different degrees of friction by the brush.

In order to identify the above-described difference, in the disclosure, current of the brush, the output value of the motor, and the rotation speed of the motor are used, and ultimately, not only can the normal floor be distinguished from the carpet, but also whether the carpet is a short-pile, a medium-pile, or a long-pile may be distinguished.

In what form to apply the sensing information described above in the neural network model will be described in detail below with reference to FIG. 5 to FIG. 12.

FIG. 5 is a diagram illustrating a configuration example of a neural network model according to an embodiment of the disclosure.

As shown in FIG. 5, based on receiving first data to fourth data from a plurality of sensors 111, 112, 113, and 114, a pre-processing module 510 may execute (or process) at least a portion from among all data that includes the first data to the fourth data and obtain a data set to be input in the neural network model.

In the above, information provided to the pre-processing module 510 has been described as being input through the sensors, but at implementation, a portion of the information may be pre-stored information in the memory 130 or pre-set data value, rather than information on a hardware sensor.

The pre-processing module 510 may combine sensing values of a certain section (e.g., when a data collecting cycle is 20 ms, the certain section is 100 ms) obtained through the plurality of sensors 111, 112, 113, and 114, determine whether to include what sensing values from among the sensing values obtained through the plurality of sensors 111, 112, 113, and 114 in the data set, and obtain the data set by applying a weight value to the sensing values. In addition, data may be encoded or embedded to fit a purpose of a neural network model 520.

The 'neural network model 520' shown in FIG. 5 may refer to an artificial intelligence model that includes a neural network trained to obtain information indicating the type of floor surface based on sensing information. As shown in FIG. 5, when the data set is received from the pre-processing module 510, the neural network model 520 may identify the type of floor surface corresponding to the data set, and output a probability value for whether the data set corresponds to which type of floor surface.

For example, the neural network model 520 may be implemented as, for example, and without limitation, a convolutional neural network (CNN), a long short-term memory (LSTM), a deep neural network (DNN), a recurrent neural network (RNN), a Restricted Boltzmann Machine (RBM), a Deep Belief Network (DBN), a bidirectional recurrent deep neural network (BRDNN), and the like, but is not limited to the examples as described herein.

Here, 'type information' may be used as a term for collectively referring to information indicating the type of floor surface. Specifically, type information may be represented as probability values for each of the plurality of floor types, but may include information on at least one from among whether carpet is present on the floor surface, a material of the floor surface, and a material of the carpet.

A control module 530 may determine the floor type using type information (i.e., probability values for each of the plurality of floor surfaces) output from the neural network model 520. For example, a type having the highest probability value from among the output type information may be determined as the current type of floor.

As described above, when the floor type is determined, the control module 530 may determine suction force corresponding to the relevant floor type using a pre-stored user preference information (use pattern information), and generate control information for the vacuum cleaner to operate at the determined suction force.

In addition, the control module 530 may determine not only the suction force, but also the rotation speed of the brush.

Meanwhile, in the above, the control module 530 has been shown as outputting suction force as control information, but at implementation, the rotation speed of the first motor or command information to be used in the first motor (e.g., voltage value, etc.) may be used rather than the suction force.

Meanwhile, in the above, the control module 530 has been shown and described as immediately receiving the output of the neural network model 520 and using the same, that is, the control module 530 has been described as performing the determination of floor type by receiving probability information for each of the plurality of floor types, but at implementation, the determination of the above-described floor type may be performed in a post-processing module. That is, the control module 530 may receive the determined floor type, and perform only the control operation accordingly thereto.

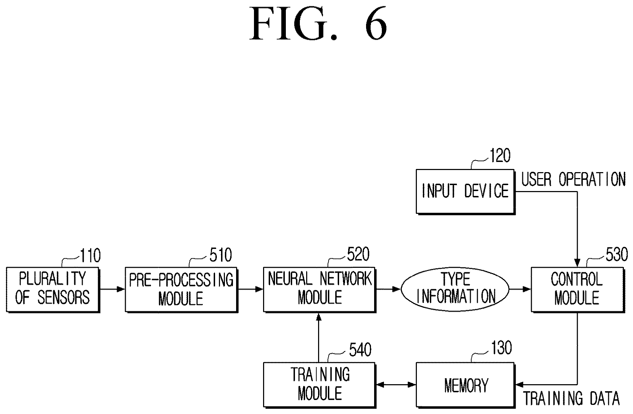

The re-training operation of when the above-described neural network model is used will be described below with reference to FIG. 6.

FIG. 6 is a diagram illustrating a configuration example of a neural network model according to an embodiment of the disclosure. Specifically, FIG. 6 is a diagram illustrating a configuration example of when the neural network model shown in FIG. 5 can be re-trained.

As described in FIG. 5, the control module 530 may control the vacuum cleaner 100 by ultimately determining the suction intensity, and the like, based on the type information output from the neural network model 520.

While the vacuum cleaner is operating using the above-described suction intensity, the user may adjust the suction intensity using the input device 120.

As described above, if the adjustment of suction intensity is input, the control module 5830 may change the control information to operate at the suction intensity corresponding to the user operation.

For example, if the user input a control command increasing the suction intensity, the control module 530 may change the suction force to a suction intensity which is higher than the current suction intensity.

If the user input a control command increasing the suction intensity while the current suction intensity is at a maximum, the control module 530 may maintain the suction intensity at a current state, and generate control information increasing the rotation speed of the brush by a certain speed.

If a command requesting to increase the suction intensity is input when the suction intensity and the brush rotation speed are at a maximum, the control module 530 may display a message notifying that increase of the suction intensity and the brush speed is not possible without a separate change to the suction force or the rotation speed of the brush.

Meanwhile, at implementation, if an increase command of the suction intensity is input from the user while the speed of the motor is at a maximum, the control module 530 may display a message notifying that it is not possible to increase the suction intensity prior to increasing the rotation speed of the brush as described above and that only the rotation speed of the brush may be increased, and additionally increase the rotation speed of the brush based on a user confirmation.

Further, the control module 530 may store the above-described information and sensing information and the like measured from a relevant time-point in the memory 130. The information as described above may be used as training data.

Meanwhile, the control module 530 may selectively perform storing of the above-described information. For example, if the change in suction intensity is a mistake by the user, that is, if the changed suction intensity is changed to a previous suction intensity without maintaining several seconds, there may be no need to use the above-described change in suction intensity as training data.

Accordingly, the control module 530 may store the above-described information as training data when the suction intensity changed by the user is maintained for a pre-set time and used. Meanwhile, at implementation, all data may be stored, and it may be possible to selectively use the stored data in a training process which will be described below.

A training module 540 may re-train the neural network model 520 using the pre-stored training data. The training module 540 may proactively determine whether to use the pre-stored training data in re-training of the neural network model, or whether to use the same in correcting of the user pattern information.

For example, as described above, if there is no abnormality in an operation of the neural network model which performs the distinguishing of the floor surfaces, but a use pattern of the user in a specific floor surface is changed, there is no need to re-train the neural network model.

Accordingly, the training module 540 may update (or correct) the user pattern information using information to be used in correcting the user pattern information from among the pre-stored training data. For example, if a control command for increasing the suction force by the user is carried out several times repeatedly while identified as the high-pile carpet, the training module 540 may determine as the user use pattern having been changed in the high-pile carpet, and correct the suction force in the carpet information within the pre-stored use pattern information.

Alternatively, the training module 540 may re-train the neural network model using information to be used in the correcting of the neural network model from among the pre-stored training data. For example, the training module 540 may train the neural network model 520 in a supervised learning method based on a training data set which includes a label. In addition thereto, a neural network model 1000 may be trained in an unsupervised learning method, a semi-supervised learning method, or a reinforcement learning method.

Here, the training data may refer to a set of data used in the training of the neural network model 520. The training data set may include at least a portion from among data obtained through the first to fourth sensors like the data set.

Meanwhile, in FIG. 6, the re-training of the neural network model 520 has been shown as being performed in the vacuum cleaner 100, but the above-described re-training at implementation may be performed in the external server, and the vacuum cleaner 100 may receive a re-trained neural network model from an external device and use the same.

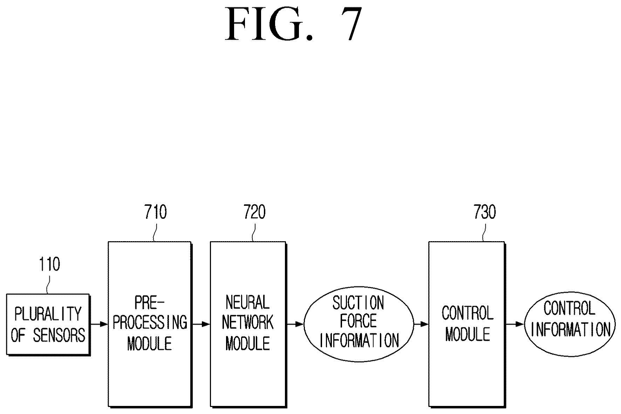

FIG. 7 is a diagram illustrating a configuration example of a neural network model according to an embodiment of the disclosure. Specifically, FIG. 7 is a diagram illustrating a use example of a neural network model that receives information of the plurality of sensors and outputs suction force information.

As shown in FIG. 7, when the first data to the fourth data are received from the plurality of sensors 111, 112, 113, and 114, a pre-processing module 710 may obtain a data set to input in the neural network model by executing (or processing) at least a portion from among data as a whole which include the first data to the fourth data.

A 'neural network model 720' shown in FIG. 7 may refer to an artificial intelligence model which includes a neural network trained to obtain sensing information and suction force information for use based on the use pattern of the user. As shown in FIG. 7, if a data set is received from the pre-processing module 710, the neural network model 720 may output suction force information. Here, the suction force information may be output as a probability value for a plurality of suction intensities, and one suction intensity may be output.

A control module 730 may generate control information for the vacuum cleaner to operate at a suction force corresponding to the suction force information output from the neural network model 720.

In addition, the control module 730 may determine a brush rotation speed corresponding to the determined suction force, and generate control information including the determined rotation speed.

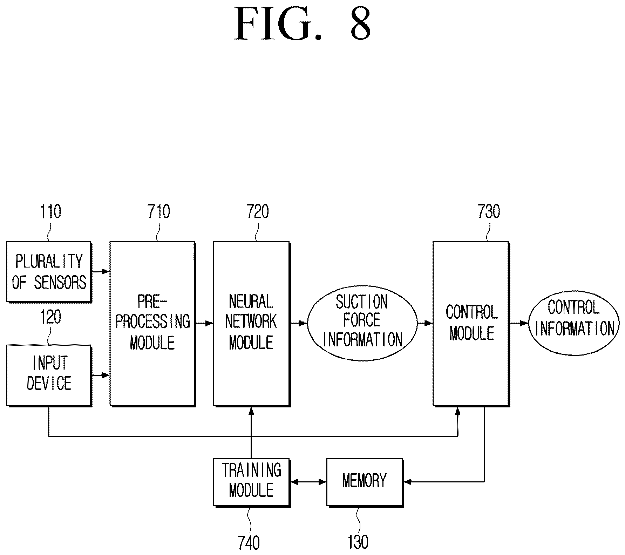

An operation of re-training using the relevant neural network model 720 will be described below with reference to FIG. 8.

FIG. 8 is a diagram illustrating a configuration example of a neural network model according to an embodiment of the disclosure.

As described in FIG. 7, the control module 730 may control the vacuum cleaner 100 by using the suction force information output from the neural network model 720.

While the vacuum cleaner is operating using the above-described suction intensity, the user may adjust the suction intensity using the input device 120.

As described above, if the adjustment of suction intensity is input, the control module 730 may change the control information so as to operate at a suction intensity corresponding to the user operation.

Further, the control module 730 may store the user control command and sensing information and the like measured from the relevant time-point in the memory 130. The information as described above may be used as training data.

Meanwhile, unlike FIG. 6, because the above-described neural network model 720 is a model trained by using not only the types of floor surfaces but also the use patterns of the user as training information, the control module 530 may re-train the neural network model 720 using the training information stored in the memory 130.

The re-training as described above may be performed after the cleaning operation of the vacuum cleaner 100 is completed, and performed when training information is gathered a certain amount or more or when collection occurs for a pre-set number of days or more.

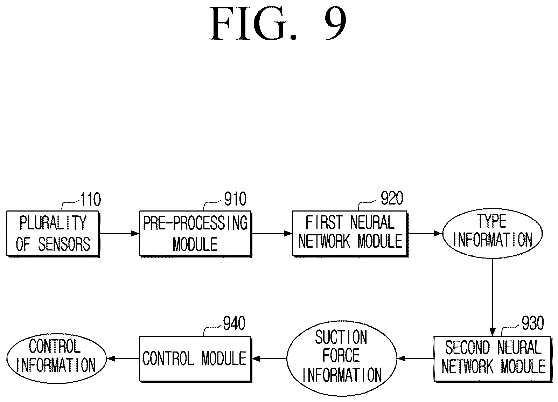

FIG. 9 is a diagram illustrating a configuration example of a neural network model according to an embodiment of the disclosure. Specifically, FIG. 9 is a diagram illustrating an embodiment of using two neural network models.

As shown in FIG. 9, when the first data to the fourth data are received from the plurality of sensors 111, 112, 113, and 114, a pre-processing module 910 may obtain a data set to input in the neural network model by executing (or processing) at least a portion from among data as a whole which include the first data to the fourth data.

A first neural network model 920 may refer to an artificial intelligence model which includes a neural network trained to obtain information indicating the types of floor surfaces based on sensing information. Because an operation of the relevant first neural network model 920 is same as the neural network model shown in FIG. 5, redundant descriptions thereof will be omitted.

A second neural network model 930 may refer to an artificial intelligence model which includes a neural network trained to obtain suction force information to use according to the determined types of floor surfaces. The second neural network model as described may be trained with the floor types determined in the first neural network model, and data on the suction intensity used by the user from the relevant floor type.

If the second neural network model 930 outputs suction force information as described above, a control module 940 may generate control information for the vacuum cleaner to operate at a suction intensity corresponding to the suction force information.

In addition, the control module 940 may also determine the rotation speed of the brush corresponding to the determined suction force information, or determine the rotation speed of the brush corresponding to the type information output from the first neural network model 920.

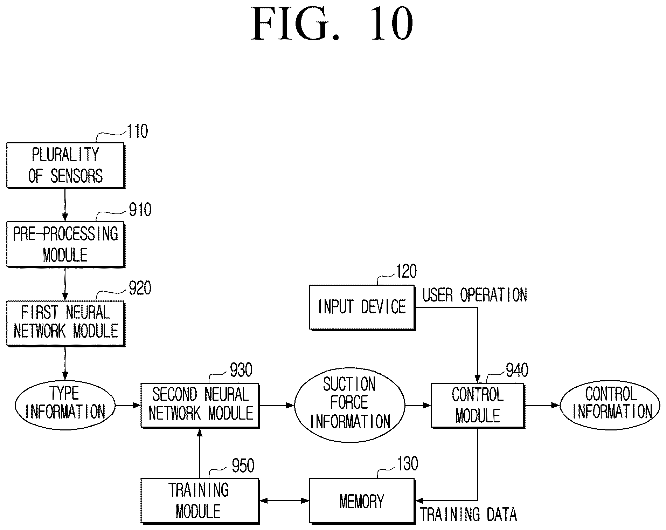

The re-training operation when using the above-described two neural network models will be described below with reference to FIG. 10.

FIG. 10 is a diagram illustrating a configuration example of a neural network model according to an embodiment of the disclosure.

The control module 940 as described in FIG. 9 may control the vacuum cleaner 100 using the suction force information output from the second neural network model 930.

While operating the vacuum cleaner using the above-described suction intensity, if the user adjusts the suction intensity using the input device 120, the control module 940 may change the control information to operate at the suction intensity corresponding to the user operation.

When the user operation causing adjustment of suction intensity as described above is input, the control module 940 may store the user control command and sensing information and the like measured from the relevant time-point in the memory 130. The information as described above may be used as training data.

If the training data as described above is collected by a certain amount or more, or after a certain time is passed, a training module 950 may use the pre-stored training data and re-train the second neural network model 930.

Meanwhile, in the example shown, an operation of re-training only the second neural network model has been described, but when dividing the training data as described in FIG. 6, and if there is training data to use in the re-training of the neural network model of FIG. 6, the first neural network model 920 may be re-trained. Alternatively, the second neural network model may be re-trained on its own in the vacuum cleaner 100, and the first neural network model may be provided in the vacuum cleaner 100 re-trained in the external device.

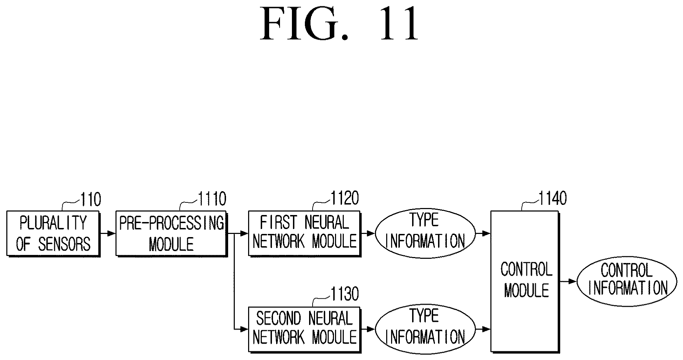

FIG. 11 is a diagram illustrating a configuration example of a neural network model according to an embodiment of the disclosure. Specifically, FIG. 11 is a diagram illustrating an embodiment of using two neural network models in determining the types of floor surfaces.

As shown in FIG. 11, when the first data to the fourth data are received from the plurality of sensors 111, 112, 113, and 114, a pre-processing module 1110 may obtain a data set to input in the neural network model by executing (or processing) at least a portion from among data as a whole which include the first data to the fourth data.

A first neural network model 1120 and a second neural network model 1130 shown in FIG. 11 may refer to artificial intelligence models which include neural networks trained to obtain information indicating the types of floor surfaces based on sensing information. As shown in FIG. 11, when data sets are received from the pre-processing module 1110, the data sets may be input to each of the first neural network model 1120 and the second neural network model 1130, and each neural network model 1120 and 1130 may output separate type information.

For example, the first neural network model 1120 may be the convolutional neural network (CNN) model, and the second neural network model 1130 may be the long short-term memory (LSTM) model.

When type information is output from each neural network model as described above, a control module 1140 may determine the floor type using the type information output from each neural network model. For example, the above-described type information may be represented as probability values for each of the plurality of floor types, and the control module 1140 may check the highest probability value within the two type information, and determine a type corresponding to the checked probability value as the floor type. An operation as described above may be referred to as a voting technique, and other techniques other than the voting technique may be used.

When the floor type is determined as described above, the control module 1140 may determine the suction force corresponding to the relevant floor type using the pre-stored user preference information (use pattern information), and generate control information for the vacuum cleaner to operate at the determined suction force.

Meanwhile, FIG. 11 may have a form same as that of FIG. 5 except for the neural network model being used in plurality. Accordingly, because the re-training operation in FIG. 11 may be performed similarly with that of FIG. 6, redundant description thereof will be omitted.

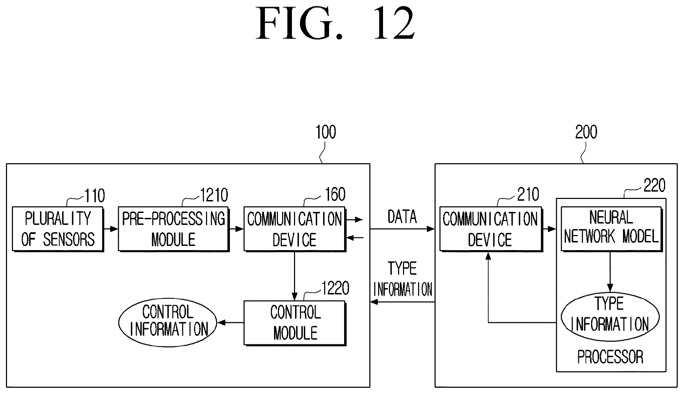

FIG. 12 is a diagram illustrating a configuration example of a neural network model according to an embodiment of the disclosure. Specifically, FIG. 12 is a diagram illustrating an embodiment of using the neural network model provided in the external server.

Referring to FIG. 12, when the first data to the fourth data are received from the plurality of sensors 111, 112, 113, and 114, a pre-processing module 1210 may obtain a data set to input in the neural network model by executing (or processing) at least a portion from among data as a whole which include the first data to the fourth data.

The relevant data set may be transmitted to an external device 200 through the communication device 160.

When the data set is received, a processor 220 of the external device may generate type information using the pre-trained neural network model, and control a communication device 210 to transmit the generated type information to the vacuum cleaner 100.

When type information is received through the communication device 160, a control module 1220 may determine the floor type based on the received type information.

Then, the control module 1140 may determine suction force corresponding to the relevant floor type using the pre-stored user preference information (use pattern information), and generate control information for the vacuum cleaner to operate at the determined suction force.

Meanwhile, FIG. 12 has been described assuming that the neural network model described in FIG. 5 is arranged in the external device, but at implementation, at least one neural network model in the embodiments described in FIG. 7 to FIG. 11 may be implemented in a form arranged in the external server.

FIG. 13 is a diagram illustrating a display example in a display of a vacuum cleaner according to an embodiment of the disclosure. Specifically, FIG. 13 illustrates various UI screens which can be displayed in the display of the vacuum cleaner.

Referring to FIG. 13, if the user turns-on a power button of the vacuum cleaner, one from among the shown user interface (UI) screens (e.g., an AI mode 1330) may be displayed. If the user selects a button adjusting the suction intensity (e.g., increase or decrease) while in a state of display as described above, the suction intensity may be adjusted in states as shown.

For example, when a "-" button (or a decrease button) is selected from the AI mode 1330, the suction intensity may be changed to a strong mode (or suction intensity 2). If the "-" button is selected again in this state, the suction intensity may be changed to a normal mode (or suction intensity 1). Alternatively, if a "+" (or an increase button) is selected in the normal mode, the suction intensity may be changed to the strong mode (or suction intensity 2).

In addition, if the "+" button is selected in the AI model 1330, the suction intensity may be changed to an ultra-strong mode (or suction intensity 3). If the "+" button is selected again in this state, the suction intensity may be changed to a maximum mode (or suction intensity 4).

Meanwhile, in the example shown, the display has been shown as displaying only the current suction intensity (or a mode name corresponding to the suction intensity), but one side of the display may display a current battery state, or information and the like on the type of the currently detected floor surface may also be displayed together therewith.

In the above, an example of adjusting suction intensity has been shown through two buttons, but an operation changing other than the suction intensity will be described below with reference to FIG. 14.

FIG. 14 is a diagram illustrating a display example in a display of a vacuum cleaner according to an embodiment of the disclosure.

First, a first UI screen 1410 may indicate an example of a display UI which can be displayed when set in an AI clean mode. For example, if the user presses the "+" button for a pre-set time (i.e., a long press) while in a third UI screen 1330 in FIG. 13, it may be operated in the AI clean mode.

The "AI clean mode" may be a mode that automatically changes the suction force of the vacuum cleaner, and may be a mode that operates at a suction force higher than when in the AI mode from a specific floor surface different from a normal AI mode. Here, the specific floor surface may be a carpet, but is not limited thereto. For example, in the carpet mode, it may be operated at a higher suction force or a higher brush rotational force than the AI protection mode which will be described below.

A second UI screen 1420 may indicate an example of a display UI displayed when set in the AI protection mode. For example, if the user presses the "-" button for the pre-set time (i.e., long press) while in the third UI screen 1330 in FIG. 13, it may be operated in the AI protection mode. Alternatively, even if the "-" button is pressed for the pre-set time in the first UI screen 1410, it may be converted to the AI protection mode.

The AI protection mode described above may be a mode in which the vacuum cleaner adaptively adjusts the suction force automatically according to the type of floor surface, and if it is checked as a carpet, operates at a lower suction force or a lower brush rotational force for carpet damage to be minimized in the cleaning process of the relevant carpet.

Meanwhile, in the above, the suction force has been described as being changed only by the type of floor surface in the AI mode, but at implementation, the suction force may be automatically changed based on an amount of filth and an amount of dust suctioned. That is, the suction force may be automatically increased and operated on a floor surface with much dust accumulated.

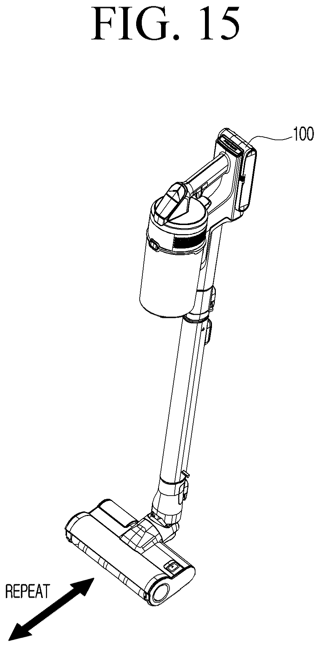

FIG. 15 is a diagram illustrating a modified example of suction force according to an embodiment of the disclosure.

In the above, the changing of suction force of the vacuum cleaner has been described as being performed by a button operation by the user or a change in floor surface that is detected. However, at implementation, the suction force may be changed based a cleaning method and the like of the user.

Referring to FIG. 15, if the user repeatedly cleans a same area as shown in the drawings, the vacuum cleaner may increase the suction force.

For example, if an x-axis value of a gyro sensor is obtained by a change in +/value being repeated n-number of times for n-seconds, it may be recognized as repeat cleaning for the same area. As described above, if output of the gyro sensor is checked, the vacuum cleaner 100 may enhance the suction force. Alternatively, if the vacuum cleaner 100 maintains the suction force and increases only the rotation speed of the brush, a suction force mode and a rotation speed mode of the brush may be raised.

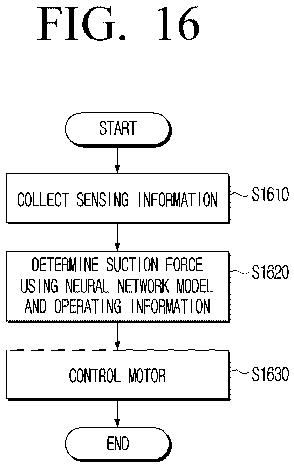

FIG. 16 is a flowchart illustrating a method for controlling a vacuum cleaner according to an embodiment of the disclosure.

Referring to FIG. 16, an operation of the vacuum cleaner may be detected using the plurality of sensors (S1610). For example, the operation of the vacuum cleaner may be detected using the first sensor configured to detect the suction pressure of the vacuum cleaner, the second sensor configured to detect current supplied to the motor that drives the brush, the third sensor configured to detect the output value of the motor that drives the brush, and the fourth sensor configured to detect the rotation speed of the brush, and the like.

Further, the suction intensity to be applied to the vacuum cleaner may be determined using the sensor information detected from the plurality of sensors, the pre-trained neural network model, and the pre-stored use pattern information (S1620). For example, when using the neural network model that outputs probability values for each of the plurality of floor types based on the sensor information detected from the sensors (i.e., embodiment of FIG. 5), the floor type may be checked by inputting the sensor information detected from the plurality of sensors in the pre-trained neural network model, and check the suction intensity to be applied to the vacuum cleaner using the checked floor type and the use pattern information.

Then, the motor of the vacuum cleaner may be controlled using the determined suction intensity (S1630). Specifically, the first motor or the driving device driving the first motor may be controlled for the first motor to rotate at a motor rotation speed corresponding to the suction intensity.

A control method according to an embodiment as described above may enable proceeding with cleaning suitable to the cleaning environment and the user intent due to the suction force being determined using the neural network model and the user pattern information, and the determined suction force being used, that is, due to not only the state of the floor surface of the cleaning surface but also the use pattern of the user taken into consideration.

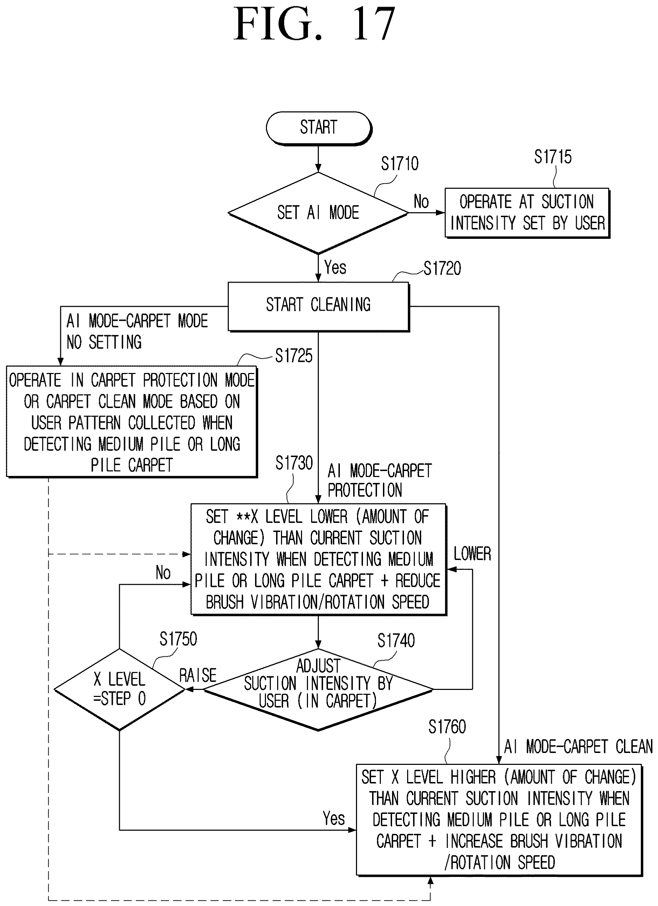

FIG. 17 is a flowchart illustrating a method for controlling suction force and a brush operation of a vacuum cleaner according to an embodiment of the disclosure.

Referring to FIG. 17, the user may determine whether the AI mode has been set (S1710). If the user does not use the AI mode, and the manual mode is selected, the user may operate at the selected suction intensity (S1715). At this time, the vacuum cleaner may store sensing information continuously detected from the plurality of sensors in the process described above and information on the suction intensity used by the user, and use the same as training data.

If set in the AI mode, the floor surface may be checked, and the vacuum cleaner may be controlled to operate at the suction force corresponding to the checked type of floor surface (S1720). However, if there is no sufficient sensing data collected to check the current type of floor surface, the vacuum cleaner may first operate at a suction intensity set as a default.

At this time, the vacuum cleaner may perform a different operation according to whether the user selects a carpet protection mode (or AI protection mode), or a carpet clean mode (or AI clean mode).

If the user selected only the AI mode without additional mode selections, a normal operation may be performed, and operated at the suction intensity and at the brush rotation speed corresponding to the user pattern. (S1725).

If the carpet protection mode is selected, the normal operation may be performed if it is not the carpet, and if the carpet is detected, it may be operated at a lower suction force and lower brush rotation speed than in the normal mode (S1730).

Meanwhile, in cases such as the above, that is if the user adjusts the suction intensity (S1470), when a command lowering the suction intensity is input, the operation lowering the suction intensity may be performed (S1740-lower).

Conversely, if the operation of increasing the suction intensity is performed (S1740-raise), and the current suction intensity is higher than when in the normal mode (S1750), the AI protection mode may be changed to the AI clean mode.

Meanwhile, when the AI clean mode is selected and the carpet is detected, it may be operated at a higher suction force and a faster brush rotation speed than when in the normal mode (S1760).

Even in this case, if the user lowers or raises the suction intensity, the suction intensity may be raised or lowered accordingly thereto, and if the suction intensity lowered by the user corresponds to the AI protection mode, the AI clean mode may be converted to the AI protection mode.

Meanwhile, in the above, it has been described that, if the user additionally selected the AI protection mode or the AI clean mode, the vacuum cleaner may operate accordingly thereto, but at implementation, the use pattern information may be stored with information on whether the AI protection mode to be applied to a specific floor type is used or information of whether the AI clean mode is used, and in this case, the above-described operation may be performed using the pre-stored use pattern information without separate user operation.

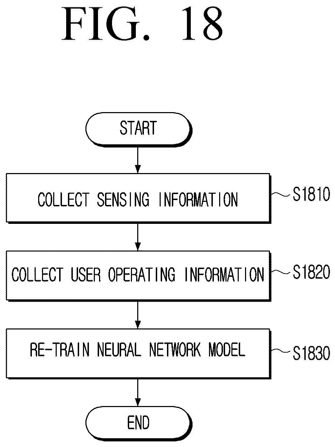

FIG. 18 is a flowchart illustrating a training operation of a neural network model according to an embodiment of the disclosure.

Referring to FIG. 18, sensing information may be collected using the plurality of sensors (S1810). Specifically, the collecting as described above may be information collected in the process for using the neural network model in the process of determining the floor type or the suction as described above in FIG. 15.

While performing cleaning using the suction intensity determined through the above-described operation, if the control command for adjusting the suction intensity is input from the user, the input control command and sensing data collected at the relevant time-point may be stored in the memory (S1820).

Further, re-training of the pre-stored neural network model may be performed using the training data stored in the memory (S 1830). The specific re-training method may vary according to a configuration method of the neural network model being used, and because the above has been described in detail in FIG. 6, FIG. 8, and FIG. 10, redundant descriptions thereof will be omitted.

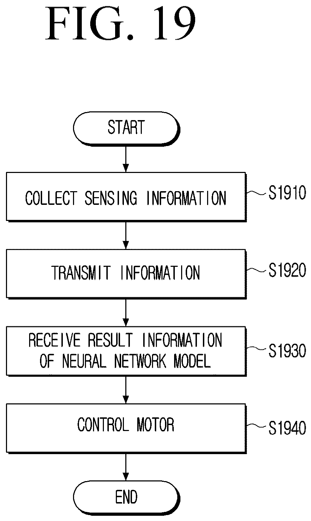

FIG. 19 is a flowchart illustrating a control operation which used information of an external device according to an embodiment of the disclosure.

Referring to FIG. 19, an operation of the vacuum cleaner may be detected using the plurality of sensors (S1910). For example, the operation of the vacuum cleaner may be detected using the first sensor configured to detect the suction pressure of the vacuum cleaner, the second sensor configured to detect current supplied to the motor that drives the brush, the third sensor configured to detect the output value of the motor that drives the brush, and the fourth sensor configured to detect the rotation speed of the brush, and the like.

Further, the information collected from the plurality of sensors may be transmitted to the external device (S1920). The operation as described may be performed periodically.

When receiving an output result of the neural network model from the external device (S1930) in response to the transmission of the collected information, the motor may be controlled using the received result (S1940).

For example, if the external server is a neural network model that determines only the floor type, the received information may be information associated with the floor type, and the suction force to be used in the cleaning process may be determined using the relevant type information and the user use pattern. Further, the first motor may be controlled for the first motor to operate at a speed corresponding to the determined suction force.

Meanwhile, the methods according to at least a portion from among the various embodiments of the disclosure described above may be implemented in an application form installable in an electronic device of the related art.

In addition, the methods according to at least a portion from among the various embodiments of the disclosure described above may be implemented with only a software upgrade, or a hardware upgrade for the electronic device of the related art.

In addition, the methods according to at least a portion from among the various embodiments of the disclosure described above may be performed through an embedded server provided in the electronic device, or at least one external server of the electronic device.

Meanwhile, according to an embodiment of the disclosure, the various embodiments described above may be implemented with software including instructions stored in a machine-readable storage media (e.g., computer). The machine may call an instruction stored in the storage medium, and as a device operable according to the called instruction, may include an electronic device (e.g., electronic device (A)) according to the above-mentioned embodiments. Based on a command being executed by the processor, the processor may directly or using other elements under the control of the processor perform a function corresponding to the command. The command may include a code generated by a compiler or executed by an interpreter. The machine-readable storage medium may be provided in the form of a non-transitory storage medium. Herein, the 'non-transitory storage medium' merely means that the device is tangible and does not include a signal (e.g., electromagnetic waves), and the term does not differentiate data being semi-permanently stored or being temporarily stored in the storage medium. For example, the 'non-transitory storage medium' may include a buffer in which data is temporarily stored. According to an embodiment, a method according to the various embodiments described in the disclosure may be provided included a computer program product. The computer program product may be exchanged between a seller and a purchaser as a commodity. The computer program product may be distributed in a form of a machine-readable storage medium (e.g., a compact disc read only memory (CD-ROM)), or distributed online (e.g., downloaded or uploaded) through an application store (e.g., PLAYSTORE^{™}) or directly between two user devices (e.g., smartphones). In the case of online distribution, at least a portion of the computer program product (e.g., downloadable app) may be stored at least temporarily in the storage medium such as a server of a manufacturer, a server of an application store, or a memory of a relay server, or temporarily generated.

The various embodiments of the disclosure may be implemented with software including instructions stored in the machine-readable storage media (e.g., computer). The machine may call an instruction stored in the storage medium, and as a device operable according to the called instruction, may include an electronic device (e.g., vacuum cleaner 100) according to the above-mentioned embodiments.

Based on the above-described command being executed by the processor, the processor may directly or using other elements under the control of the processor perform a function corresponding to the command. The command may include a code generated by a compiler or executed by an interpreter.

While the disclosure has been illustrated and described with reference to various example embodiments thereof, it will be understood that the various example embodiments are intended to be illustrative, not limiting. It will be understood by those skilled in the art that various changes in form and details may be made therein without departing from the true spirit and full scope of the disclosure, including the appended claims and their equivalents.

## Claims

1. A vacuum cleaner, comprising:
a plurality of sensors configured to detect an operation of the vacuum cleaner;
a memory configured to store a pre-trained neural network model and use pattern information of a user with respect to the operation of the vacuum cleaner; and
a processor configured to control the vacuum cleaner by determining suction intensity to be applied by the vacuum cleaner using one or more of the use pattern information of the user, sensor information detected from the plurality of sensors, and the pre-trained neural network model.

2. The vacuum cleaner of claim 1, wherein
the pre-trained neural network model is a model that outputs a probability value for a plurality of floor types, respectively, based on sensor information detected from a sensor among the plurality of sensors, and
the processor is configured to:
check a floor type by inputting sensor information detected from the plurality of sensors in the pre-trained neural network model, and determine suction intensity to be applied by the vacuum cleaner by using the checked floor type and the use pattern information.

3. The vacuum cleaner of claim 2, further comprising:
a driving device configured to control a motor that provides driving force of a brush of the vacuum cleaner,
wherein the processor is configured to:
determine a rotation speed of the brush using the checked floor type and the use pattern information, and control the driving device for the brush to rotate at the determined rotation speed.

4. The vacuum cleaner of claim 2, further comprising:
an input device configured to receive a user command to adjust suction intensity of the vacuum cleaner;
wherein the processor is configured to:
adjust, based on the user command to adjust the suction intensity of the vacuum cleaner being received while the vacuum cleaner is operating at the determined suction intensity, a current suction intensity to a corresponding suction intensity of the user command, and store the adjusted suction intensity and the checked floor type in the memory.

5. The vacuum cleaner of claim 4, wherein
the processor is configured to:
correct the use pattern information using the corresponding suction intensity of the user command and the checked floor type stored in the memory.

6. The vacuum cleaner of claim 2, wherein
the use pattern information comprises at least one from among a user preference suction intensity, brush speed information, and protection mode application information for the plurality of floor types, respectively.

7. The vacuum cleaner of claim 2, wherein the pre-trained neural network is a first neural network model,
the memory is configured to:
store the first neural network model and a second neural network model which output probability values for the plurality of floor types, respectively, and
the processor is configured to:
obtain first probability information by inputting sensor information detected from the plurality of sensors in the first neural network model,
obtain second probability information by inputting sensor information detected from the plurality of sensors in the second neural network model, and
determine a floor type based on the obtained first probability information and second probability information.

8. The vacuum cleaner of claim 7, wherein
the processor is configured to:
check a highest probability value from among the first probability information and the second probability information, and determine a floor type corresponding to the checked highest probability value as a current floor type.

9. The vacuum cleaner of claim 2, wherein
the plurality of floor types comprise a normal floor, a lifted floor, a mat, a low-pile carpet, a medium-pile carpet, and a high-pile carpet, and
the processor is configured to :
determine, based on the checked floor type being the medium-pile carpet or the high-pile carpet, and the use pattern information comprising carpet protection information, a respective suction intensity with a low suction force than a suction force based on the checked floor type being the normal floor.

10. The vacuum cleaner of claim 1, wherein
the pre-trained neural network model is a model that outputs suction intensity to be applied by the vacuum cleaner by being trained using sensor information detected from a sensor among the plurality of sensors and use pattern information, and
the processor is configured to:
determine suction intensity to be applied by the vacuum cleaner by inputting sensor information detected from the plurality of sensors in the pre-trained neural network model.

11. The vacuum cleaner of claim 10, further comprising:
an input device configured to receive a user command to adjust suction intensity of the vacuum cleaner;
wherein the processor is configured to:
adjust, based on the user command to adjust the suction intensity of the vacuum cleaner being input while the vacuum cleaner is operating at the determined suction intensity, current suction intensity to a suction intensity corresponding to the user command, store the user command and the sensor information detected from the plurality of sensors in the memory, and re-train the pre-trained neural network model using the user command and the sensor information stored in the memory.

12. The vacuum cleaner of claim 1, wherein the pre-trained neural network is a first neural network model,
the memory is configured to:
store the first neural network model configured to output floor type information by receiving sensor information and a second neural network model configured to output suction force based on type information, and
the processor is configured to:
check a floor type by inputting sensor information detected from the plurality of sensors in the first neural network model, and check suction intensity to be applied by the vacuum cleaner by inputting the checked floor type in the second neural network model.

13. The vacuum cleaner of claim 1, wherein
the plurality of sensors comprise:
an acceleration sensor configured to detect a moving state of the vacuum cleaner, and
the processor is configured to:
determine, based on the vacuum cleaner being checked as moving repeatedly with respect to a same area, an increased suction intensity than a current suction intensity.

14. A method for controlling a vacuum cleaner, the method comprising:
detecting an operation of the vacuum cleaner using a plurality of sensors;
determining suction intensity to be applied by the vacuum cleaner using one or more sensor information detected from the plurality of sensors, a pre-trained neural network model, and pre-stored use pattern information; and
controlling a motor of the vacuum cleaner using the determined suction intensity.

15. A non-transitory computer-readable recording medium in which a program for executing a control method of a vacuum cleaner is stored, the method comprising:
detecting an operation of the vacuum cleaner using a plurality of sensors;
determining suction intensity to be applied by the vacuum cleaner using one or more sensor information detected from the plurality of sensors, a pre-trained neural network model, and pre-stored use pattern information; and
controlling a motor of the vacuum cleaner using the determined suction intensity.
